# FASCICULE DE BREVET EUROPEEN

(11) **EP 0 827 687 B1**
(45) Date de publication et mention de la délivrance du brevet: **17.01.2001**
(21) Numéro de dépôt: 97460034.8
(22) Date de dépôt: 05.09.1997
(51) Int. Cl.: A01K 1/015

(54) **Plancher de case pour animaux**
Bodenrost für Tiere
Grid floor for animals

(30) Priorité: 05.09.1996 FR 9611046
(43) Date de publication de la demande: 11.03.1998
(73) Titulaire: I-TEK SA, F-22250 Tremeur (FR)
(72) Inventeur: Lesnard, Pierre, 22250 Tremeur (FR)
(74) Mandataire: Maillet, Alain

(56) Documents cités:
- DE-A- 4 010 817
- DE-U- 8 502 253
- GB-A- 2 203 625
- US-A- 4 256 057

## Description

La présente invention concerne un plancher de case pour animaux, du type comportant des moyens pour l'évacuation des déjections desdits animaux vers une fosse ou un bac de récupération desdites déjections situé au-dessous dudit plancher. L'invention s'applique notamment aux cases de gestation et de maternité dont sont pourvues les porcheries.

On connaît déjà des planchers comportant des moyens permettant de faciliter l'évacuation des déjections des porcs. Ces moyens sont constitués d'une trappe qui est formée de manière pivotante dans le plancher et qui est prévue pour être soulevée lorsqu'on souhaite procéder à l'évacuation des déjections.

Un inconvénient majeur de tels moyens d'évacuation est qu'ils peuvent s'avérer dangereux pour les truies et les porcelets. En particulier, la trappe précitée peut entraîner, lorsqu'elle est ouverte, la chute de porcelets dans la fosse ou le bac de récupération, et elle peut blesser les membres postérieurs des truies.

Le but de la présente invention est de proposer un plancher de case pour animaux comportant des moyens d'évacuation des déjections déposées à la surface dudit plancher vers un dispositif de récupération du type fosse ou bac situé sous ledit plancher, lesdits moyens pouvant prendre une première position où ils sont situés dans le plan dudit plancher et une seconde position où ils définissent une ouverture dans celui-ci, dont la structure soit telle que, d'une part, les interventions de l'éleveur pour le nettoyer soient réduites au minimum et que, d'autre part, les animaux ne risquent pas de se blesser à cause desdits moyens.

A cet effet, le plancher de case selon l'invention est tel que ladite ouverture est ajourée dans ladite seconde position, de telle manière qu'elle constitue un caillebotis pouvant supporter lesdits animaux.

Selon une autre caractéristique de l'invention, lesdits moyens d'évacuation sont constitués d'au moins une trappe à claires-voies, ladite ou chaque trappe comportant des barreaux qui sont respectivement prévus pour fermer partiellement les jours de ladite ou de chaque partie du plancher dans ladite première position, ladite ou chaque trappe étant prévue pour pouvoir pivoter en dessous dudit plancher de manière à occuper ladite seconde position.

Selon une autre caractéristique de l'invention, ladite ou chaque partie dudit plancher comporte des moyens élastiques pour bloquer ladite ou chaque trappe dans ladite première position.

Selon une autre caractéristique de l'invention, l'axe de pivotement de ladite ou de chaque trappe est parallèle à la direction transversale dudit plancher.

Selon une autre caractéristique de l'invention, ledit plancher comporte au moins une partie du type caillebotis située en avant de ladite ou de chaque trappe et de manière adjacente à celle-ci, ladite ou chaque partie du type caillebotis étant constituée de lattes longitudinales par rapport audit plancher qui sont supportées par des traverses, de telle sorte que ces dernières soient entièrement situées sous lesdites lattes.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 est une vue partielle de dessus d'un plancher de case selon l'invention en position fermée,
la Fig. 2 est une vue de dessous en perspective illustrant l'ouverture à claires-voies formée par le plancher selon l'invention en position ouverte,
la Fig. 3 est une vue partielle en coupe selon le plan III-III de la Fig. 1 dudit plancher en position fermée,
la Fig. 4 est une vue du plancher de la Fig. 3 dans une position autorisant son ouverture,
la Fig. 5 est une vue du plancher de la Fig. 3, représenté en cours d'ouverture et en position ouverte,
la Fig. 6 est une vue en perspective illustrant l'actionnement du plancher en position de fermeture.

Le plancher selon l'invention est constitué d'un cadre 1 sensiblement rectangulaire à l'intérieur duquel sont fixés plusieurs caillebotis 2. De manière connue, ledit plancher comporte, d'une part, un premier ensemble médian de caillebotis 2 destiné à recevoir un animal adulte, tel qu'une truie, et, d'autre part, un second ensemble de caillebotis situés de chaque côté dudit premier ensemble et destinés à recevoir des animaux en bas âge, tels que des porcelets.

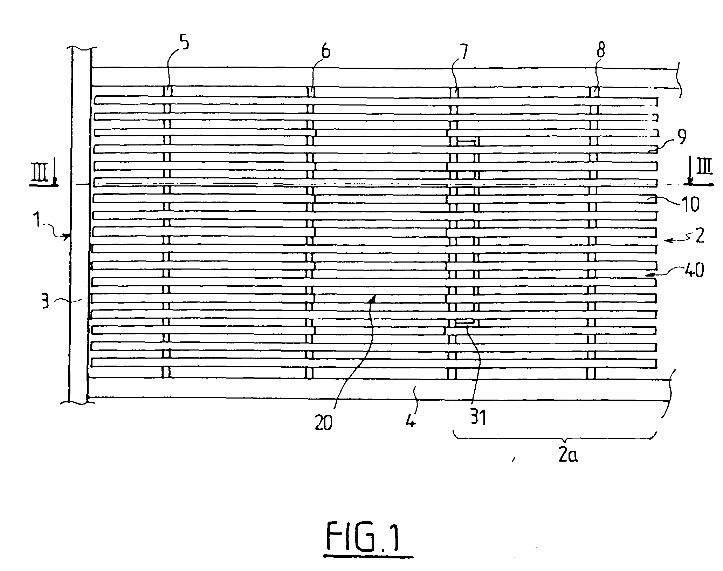

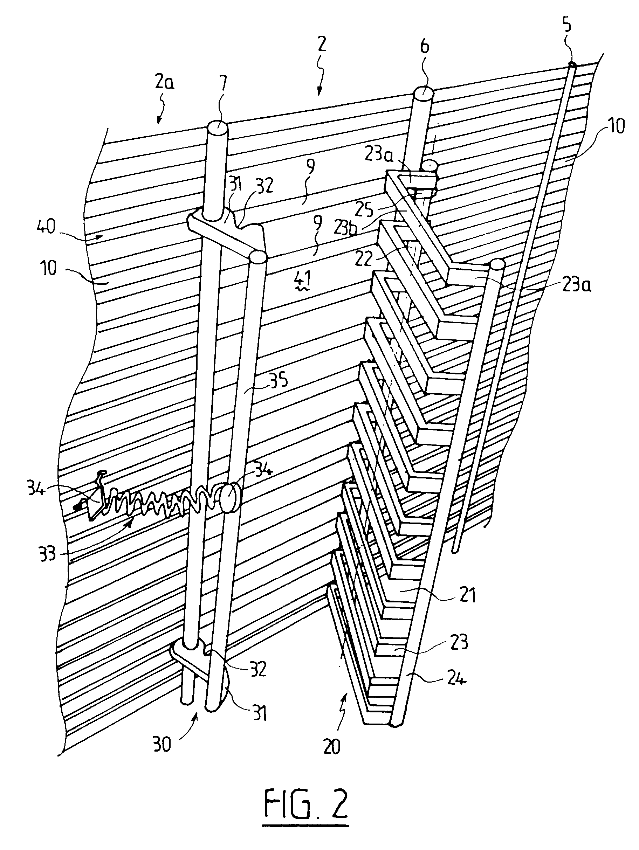

On a seulement représenté à la Fig. 1 la partie dudit premier ensemble médian qui est destinée à recevoir l'arrière d'une truie. Cette partie est constituée d'un caillebotis 2 métallique et par exemple rectangulaire qui est délimité, d'une part, par une poutre 3 dans le sens de sa largeur et, d'autre part, par deux longerons 4 qui sont fixés sur ladite poutre 3 en l'une de leurs extrémités respectives. Des traverses 5, 6, 7 et 8 de section circulaire sont montées entre les longerons 4 et perpendiculairement à ces derniers. Lesdites traverses 5, 6, 7 et 8 sont prévues pour supporter des lattes 9 et 10 droites, de telle manière qu'elles soient entièrement situées sous lesdites lattes 9 et 10, c'est-à-dire en regard de la fosse de récupération des déjections (non représentée) suite à l'installation du plancher de case.

Le caillebotis 2 comporte, dans sa partie médiane comprise entre deux traverses 6 et 7 consécutives, un moyen 20 pour l'évacuation des déjections. Ledit moyen 20 est constitué d'une trappe à claires-voies qui est montée pivotante autour d'un axe 22 parallèle à la direction desdites traverses 6 et 7 (voir Fig. 2).

La trappe 20, représentée en position ouverte à la Fig. 2, comporte des jours 21 qui sont délimités par des barreaux 23, lesquels sont montés perpendiculairement entre deux barres transversales 22 et 24 cylindriques. L'une desdites barres 22 et 24 constitue ledit axe de pivotement 22 de la trappe 20 et elle est reliée à l'une desdites traverses 6 par l'intermédiaire d'une paire de bagues 25 (seule l'une de ces bagues 25 est visible aux Figs. 2 et suivantes). L'autre barre transversale 24 constitue l'extrémité libre de la trappe 20. Les bagues 25 sont respectivement soudées sur ladite traverse 6 et elles sont prévues pour entourer l'axe 22 avec jeu, de manière qu'il puisse évoluer en rotation à l'intérieur desdites bagues 25.

De plus, des lattes 10 du caillebotis 2 ont été coupées en alternance au niveau desdites traverses 6 et 7, de manière à permettre l'insertion des barreaux 23 en lieu et place des portions de lattes 10 coupées, lorsque la trappe 20 est dans la position fermée de la Fig. 1.

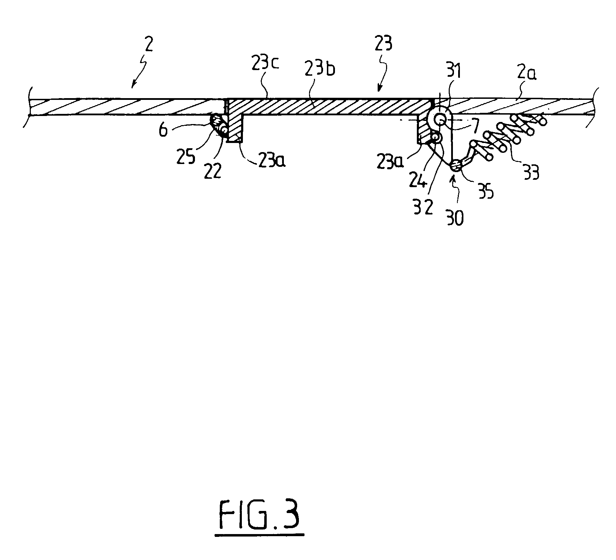

Comme on peut le voir à la Fig. 3, les barreaux 23 de la trappe 20 présentent une forme de U renversé, et les ailes 23a du U caractérisant chaque barreau 23 sont respectivement soudées sur l'axe de pivotement 22 et la barre d'extrémité 24, de telle sorte que l'âme 23b du U de chaque barreau 23 ait sa face supérieure 23c au même niveau que le reste du caillebotis 2.

L'autre traverse 7, qui n'est pas reliée à l'axe de pivotement 22 de la trappe 20, est pourvue d'un moyen 30 pour assurer le blocage de ladite trappe 20 en position fermée. Ce moyen 30 est constitué, d'une part, d'au moins une bague 31 entourant avec jeu ladite traverse 7 et comportant une encoche 32 prévue pour recevoir et immobiliser la barre d'extrémité 24 de la trappe 20 et, d'autre part, d'un moyen 33 prévu pour rappeler la ou chaque bague 31 en position de blocage lorsque celle-ci s'est écartée de ladite position en tournant autour de la traverse 7.

Dans cet exemple de réalisation, deux bagues 31 entourent la traverse 7 et ledit moyen de rappel 33 est constitué d'un ressort à compression prenant appui par l'intermédiaire de rondelles 34 (voir Fig. 2), d'une part, sur la partie 2a du caillebotis 2 qui est adjacente à la trappe 20 et opposée à son axe de pivotement 22 et, d'autre part, sur une barre de support 35 qui est soudée sur lesdites bagues 31. Plus précisément, la barre de support 35 est située sous la traverse 7 et chacun de ses points décrit une trajectoire circulaire ayant pour centre ladite traverse 7 lors de la rotation de chaque bague 31 autour de celle-ci.

On notera cependant que ledit moyen de blocage 30 de la trappe 20 en position fermée pourrait être constitué de tout système de verrouillage approprié, par exemple du type comportant un crochet de fixation solidaire de la traverse 7, ledit crochet étant prévu pour coopérer avec la trappe 20 de sorte à l'immobiliser et à la verrouiller en position horizontale.

De plus, lorsque la trappe 20 est dans la position fermée de la Fig. 1, l'ensemble du caillebotis 2 est caractérisé par des jours 40 de largeur unique, trappe 20 incluse. En effet, l'espacement 21 existant entre les barreaux 23 de la trappe 20 et l'épaisseur desdits barreaux 23 sont conçus pour que l'insertion de chaque barreau 23 entre deux lattes non coupées 9 adjacentes, qui intervient lors de la fermeture de la trappe 20, définisse deux jours 40 entre lesdites lattes 9 et ledit barreau 23 de largeur identique à ceux présents sur tout le reste du caillebotis 2.

A titre simplement indicatif, la largeur des jours 40 du caillebotis 2 est de 10 mm lorsque le plancher est en position fermée. Quant aux barreaux 23, ils sont espacés de 30 mm et leur épaisseur est de 10 mm.

Par conséquent, lorsque le plancher est dans la position ouverte représentée à la Fig. 2, l'ouverture de la trappe 20 définit des jours 41 dont la largeur de chacun est égale à celle du jour 21 existant entre deux barreaux 23, puisque ceux-ci sont prévus pour être insérés à la place de deux lattes coupées 10 qui sont séparées par une troisième latte non coupée 9.

La largeur des jours 41 libérés par l'ouverture de la trappe 20 est donc de 30 mm dans cet exemple de réalisation.

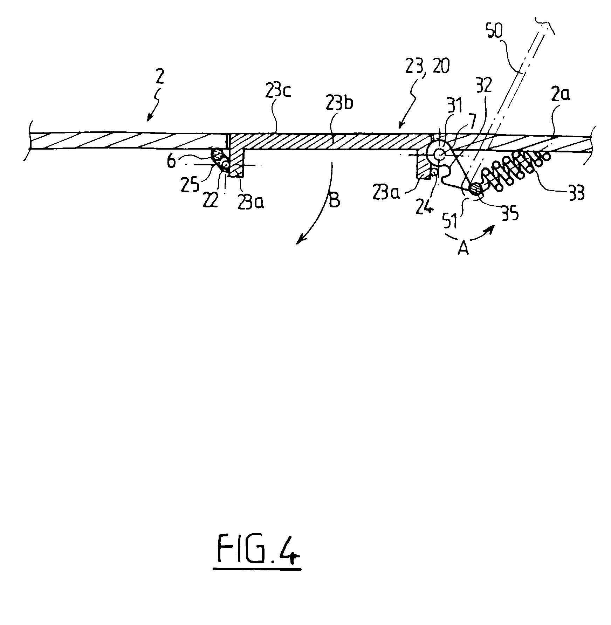

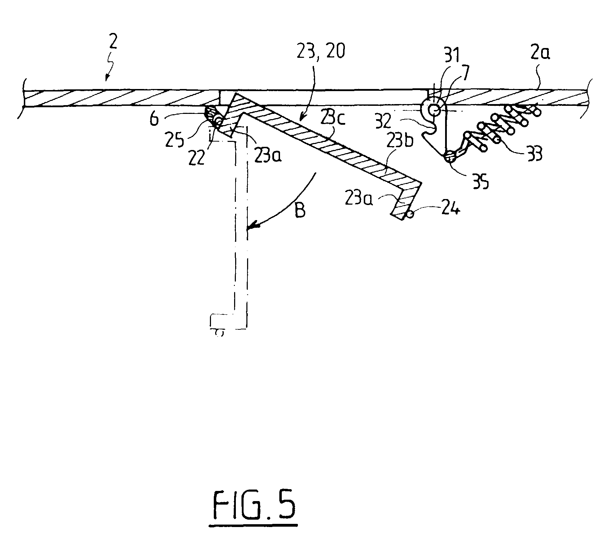

L'ouverture de la trappe 20 s'effectue de la manière suivante, en référence aux Figs. 4 et 5.

On exerce d'abord, par exemple au moyen d'une tige 50 pourvue d'un crochet 51 à l'une de ses extrémités, une poussée sur la barre de support 35 de sorte à l'éloigner de la barre d'extrémité 24 de la trappe 20 via la compression du ressort 33 (voir flèche A à la Fig. 4). Cette poussée a pour effet de faire tourner les bagues 31 autour de la traverse 7 de manière à déverrouiller la trappe 20 en faisant sortir sa barre d'extrémité 24 de l'encoche 32 de chaque bague 31. Il s'ensuit que ladite trappe 20 pivote dans le sens indiqué par la flèche B.

Comme on peut le voir à la Fig. 5, on prolonge ensuite le pivotement de la trappe 20 jusqu'à ce qu'elle ait par exemple décrit un angle voisin de 90° pour passer de sa position fermée à sa position d'ouverture.

Lorsque la trappe 20 est ouverte, les déjections de la truie qui sont émises à la verticale de ladite trappe 20 tombent directement à travers les jours 41 de l'ouverture ainsi libérée (voir Fig. 2).

Dans le cas où des déjections sont émises en avant de la trappe 20, c'est-à-dire du côté 2a du caillebotis 2 qui est adjacent à la traverse 7, ces déjections seront peu à peu poussées par les membres postérieurs de la truie pour tomber dans ladite ouverture, du fait du mouvement de recul naturel qui caractérise cet animal lorsqu'il est enfermé. En effet, un avantage substantiel du caillebotis 2 selon l'invention est qu'il n'entrave pas la progression des déjections dans la direction longitudinale de la case, de par le montage des traverses 5, 6, 7 et 8 sous les lattes 9 et 10 et non pas en saillie au-dessus de celles-ci.

Par conséquent, la tâche de nettoyage du plancher de case incombant à l'éleveur est considérablement allégée, avec le caillebotis 2 selon l'invention.

De plus, la largeur des jours 41 de ladite ouverture à claires-voie, qui est libérée par le pivotement vers le bas de la trappe 20, est telle qu'elle empêche les porcelets de tomber dans la fosse de récupération des déjections.

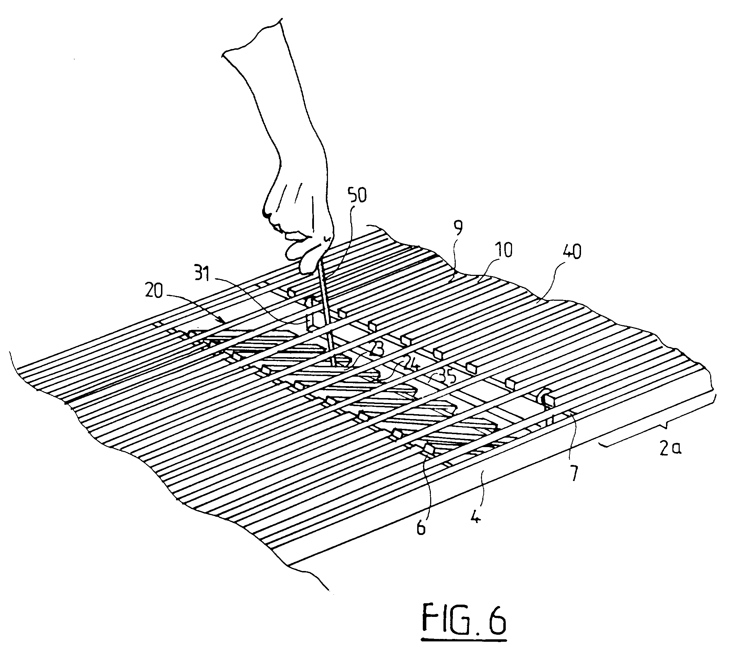

On a illustré à la Fig. 6 le mode de fermeture de la trappe 20. Pour ce faire, on positionne le crochet 51 de la tige 50 précitée sous l'un des barreaux 23 de la trappe 20 et au voisinage de l'extrémité libre de celle-ci, de manière à pouvoir soulever ladite trappe 20 et loger sa barre d'extrémité 24 dans l'encoche 32 de chaque bague 31. Grâce à la force de rappel exercée par le ressort 33 sur les bagues 31, la trappe 20 est maintenue en position de fermeture (le ressort 33 et l'encoche 32 de chaque bague 31 n'ont pas été représentés sur la Fig. 6 pour des raisons de clarté).

D'un point de vue pratique, la trappe 20 demeure en position fermée pendant la mise bas de l'animal et durant 48 heures environ après la naissance des petits, afin de garantir la sécurité de ces derniers. En effet, si la trappe 20 était ouverte à ce moment-là, les nouveaux-nés pourraient tomber dans la fosse située sous le plancher par les jours 41 de l'ouverture, de par leur constitution fragile dans les heures suivant leur naissance.

On comprendra que la présente invention ne se limite pas à un plancher de case comportant une trappe 20 montée pivotante vers le bas dudit plancher, ladite trappe 20 étant prévue pour ajourer une partie dudit plancher dans sa position d'ouverture, mais se rapporte d'une manière générale à tout plancher dont au moins une partie peut prendre une première position fermée et une seconde position ouverte, ladite position ouverte définissant une ouverture ajourée qui constitue un caillebotis pour les animaux évoluant sur ledit plancher.

On pourrait par exemple concevoir un plancher dont au moins une partie comporterait des barreaux droits montés de manière amovible par des moyens appropriés entre deux traverses 6 et 7 consécutives.

## Revendications

1. Plancher de case pour animaux comportant des moyens d'évacuation (20) des déjections déposées à la surface (2) dudit plancher vers un dispositif de récupération du type fosse ou bac situé sous ledit plancher, lesdits moyens (20) pouvant prendre une première position où ils sont situés dans le plan dudit plancher et une seconde position où ils définissent une ouverture dans celui-ci, caractérisé en ce que ladite ouverture est ajourée dans ladite seconde position, de telle manière qu'elle constitue un caillebotis pouvant supporter lesdits animaux.

2. Plancher de case selon la revendication 1, caractérisé en ce que lesdits moyens d'évacuation (20) sont constitués d'au moins une trappe à claires-voies, ladite ou chaque trappe (20) comportant des barreaux (23) qui sont respectivement prévus pour fermer partiellement les jours (41) de ladite ou de chaque partie du plancher dans ladite première position, ladite ou chaque trappe (20) étant prévue pour pouvoir pivoter en dessous dudit plancher de manière à occuper ladite seconde position.

3. Plancher de case selon la revendication 2, caractérisé en ce que ladite ou chaque partie dudit plancher comporte des moyens élastiques (30) pour bloquer ladite ou chaque trappe (20) dans ladite première position.

4. Plancher de case selon la revendication 2 ou 3, caractérisé en ce que l'axe de pivotement (22) de ladite ou de chaque trappe (20) est parallèle à la direction transversale dudit plancher.

5. Plancher de case selon la revendication 4, caractérisé en ce qu'il comporte au moins une partie du type caillebotis (2a) située en avant de ladite ou de chaque trappe (20) et de manière adjacente à celle-ci, ladite ou chaque partie (2a) étant constituée de lattes (9 et 10) longitudinales par rapport audit plancher qui sont supportées par des traverses (7 et 8), de telle sorte que ces dernières soient entièrement situées sous lesdites lattes (9 et 10).

## Claims

1. Shelf flooring for animals consisting of the means of removal (20) of excrement lying on the surface (2) of the said flooring in the direction of a recovery device of the pit or trough type located under the aforesaid flooring, the aforesaid means (20) being able to take up an initial position where they are situated at the level of the said flooring and a second position where they define an opening into it, characterised in that the said opening is hollowed out in the said second position, such that it constitutes a duckboard capable of supporting the aforesaid animals.

2. Shelf flooring in accordance with claim 1, characterised in that the aforesaid means of removal (20) consists of at least one open work fencing-type trap door, the aforesaid or each trap door (20) consisting of bars (23) which are intended to partially restrict daylight (41) of the said or each part of the flooring in the aforesaid initial position, the said or each trap door (20) being arranged so as to be able to pivot below the aforesaid flooring to take up the aforesaid second position.

3. Shelf flooring in accordance with claim 2, characterised in that the said or each part of the aforesaid flooring consists of elastic means (30) in order to block the said or each trap door (20) in the aforesaid initial position.

4. Shelf flooring in accordance with claim 2 or 3, characterised in that the pivotal axis (22) of the said or of each trap door (20) is parallel to the transverse direction of the aforesaid flooring.

5. Shelf flooring in accordance with claim 4, characterised in that it contains at least one duckboard type part (2a) located in front of the said or of each trap door (20) and adjacent to it, the said or each part (2a) consisting of longitudinal boards (9 and 10) in relation to the said flooring which are supported by crosspieces (7 and 8) such that these latter are totally situated under the said boards (9 and 10).

## Patentansprüche

1. Bodenrost für Tiere, der Mittel (20) zur Beseitigung der Exkremente umfaßt, die an der Fläche (2) des Bodens zu einer Auffangeinrichtung vom Gruben- oder Wannentyp hin angeordnet sind, die sich unter dem Boden befindet, wobei die Mittel (20) eine erste Position, in der sie sich in der Ebene des Bodens befinden, und eine zweite Position einnehmen können, in der sie eine Öffnung in diesem definieren, dadurch gekennzeichnet, daß die Öffnung in der zweiten Position derart durchbrochen ist, daß sie einen Rost bildet, der die Tiere tragen kann.

2. Bodenrost nach Anspruch 1, dadurch gekennzeichnet, daß die Beseitigungsmittel (20) aus wenigstens einer Klappe mit Zwischenräumen bestehen, wobei die oder jede Klappe (20) Stäbe (23) umfaßt, die jeweils dafür vorgesehen sind, in der ersten Position die Aussparungen (41) des oder jedes Teils des Bodens teilweise zu verschließen, wobei die oder jede Klappe (20) dafür vorgesehen ist, unter den Boden schwenken zu können, um die zweite Position einzunehmen.

3. Bodenrost nach Anspruch 2, dadurch gekennzeichnet, daß der oder jeder Teil des Bodens elastische Mittel (30) umfaßt, um die oder jede Klappe (20) in der ersten Position zu arretieren.

4. Bodenrost nach Anspruch 2 oder 3, dadurch gekennzeichnet, daß die Schwenkachse (22) der oder jeder Klappe (20) zur Querrichtung des Bodens parallel ist.

5. Bodenrost nach Anspruch 4, dadurch gekennzeichnet, daß er wenigstens einen Teil (2a) vom Rosttyp umfaßt, der vor der oder jeder Klappe (20) und dieser benachbart gelegen ist, wobei der oder jeder Teil (2a) aus im Verhältnis zum Boden in Längsrichtung verlaufenden Latten (9 und 10) besteht, die von Querträgern (7 und 8) so getragen werden, daß sich diese letzteren vollständig unter den Latten (9 und 10) befinden.
